Europäisches Patentamt

(19) European Patent Office

Office européen des brevets

(11) Numéro de publication: **0 138 646**

**B1**

(12) **FASCICULE DE BREVET EUROPÉEN**

(45) Date de publication du fascicule du brevet:
03.02.88

(21) Numéro de dépôt: **84401724.4**

(22) Date de dépôt: **28.08.84**

(51) Int. Cl.⁴: **G 02 B 26/10**

(54) Dispositif d'analyse de champ spatial pour la localisation angulaire d'objects rayonnants.

(30) Priorité: **09.09.83 FR 8314405**

(43) Date de publication de la demande:
**24.04.85 Bulletin 85/17**

(45) Mention de la délivrance du brevet:
**03.02.88 Bulletin 88/5**

(84) Etats contractants désignés:
**DE GB**

(56) Documents cité:
**EP-A-0 040 973**
**DE-A-2 202 212**
**FR-A-2 157 937**
**FR-A-2 312 039**
**GB-A-2 106 267**

**PATENTS ABSTRACTS OF JAPAN, vol. 6, no. 41(P-106)(919), 13 mars 1982**

(73) Titulaire: **THOMSON- CSF, 173, Boulevard Haussmann, F-75379 Paris Cédex 08 (FR)**

(72) Inventeur: **Bargues, Denis, THOMSON- CSF SCPI 173, bld Haussmann, F-75379 Paris Cedex 08 (FR)**
Inventeur: **Bonnard, René, THOMSON- CSF SCPI 173, bld Haussmann, F-75379 Paris Cedex 08 (FR)**
Inventeur: **Durfresnes de Virel, François, THOMSON- CSF SCPI 173, bld Haussmann, F-75379 Paris Cedex 08 (FR)**

(74) Mandataire: **Trocellier, Roger, THOMSON- CSF SCPI 19, avenue de Messine, F-75008 Paris (FR)**

## Description

La présente invention concerne un dispositif d'analyse de champ spatial pour la localisation angulaire d'objets rayonnants dans lequel l'image vidéo est formée par balayage linéaire de champ. L'invention s'applique plus particulièrment à des systèmes équipés d'une barrette détectrice en tant que dispositif photodétecteur ou senseur d'image, et où l'on effectue une analyse par déplacement rectiligne de l'image du champ instantané observé, le déplacem ent s'effectuant perpendiculairement à la barrette.

L'invention s'applique dans le secteur optoélectronique, à des dispositifs de prise de vue télévision, infrarouge ou autres, utilisés dans le domaine militaire ou civil, pour constituer par exemple des systèmes d'écartométrie, de guidage, etc...

Un but de l'invention est de réaliser un dispositif d'analyse qui produit successivement sur le détecteur et de manière répétée, au moins deux images correspondant à des champs d'angle solide différent et pouvant être coaxiaux ou non. Une application particulière consiste en un dispositif d'écartométrie optique pour la mesure des dépointages angulaires de cibles représentées par des missiles tirés en rafales. Ce problème requiert d'une part, l'analyse d'un grand champ pour l'acquisition et la prise en charge de missiles qui viennent d'être tirés et d'autre part, l'analyse d'un petit champ pour des missiles tirés précédemment et qui se trouvent donc situes à plus grande distance, ceci dans le but d'accroître la précision de l'appareil écartomètre. La simultanéité des deux champs est à assurer dans ce concept d'utilisation par une commutation à cadence élevée. En outre, le montage permet une exploitation aisée dans des bandes spectrales différentes dans les deux champs.

Il est connu par la publication de brevet FR-A-2 312 039, un appareil explorateur d'image thermique qui comporte un objectif d'entrée pour focaliser le rayonnement, cet objectif étant suivi d'un prisme polygonal de réfraction tournant autour d'un axe perpendiculaire à celui de l'optique d'entrée et qui comporte une pluralité de paires de faces parallèles, chaque paire étant constituée de deux faces opposées du prisme également inclinées par rapport à l'axe de rotation. L'angle d'inclinaison varie d'une face à la suivante en sorte de balayer à chaque fois une partie différente du plan image à analyser et d'accroître ainsi le champ total d'observation. Le balayage dans le plan détecteur est alors obtenu sous forme de bandes juxtaposées parallèlement à la direction de déplacement. En utilisant une barrette comme dipositif détecteur, celle-ci est disposée perpendiculairement au sens du défilement d'image. Une optique de transport d'images est généralement prévue pour conjuguer le plan image situé à l'arrière du prisme avec celui où l'on va positionner la surface photosensible du détecteur. La barrette peut ainsi être aisément montée en aval du prisme tournant.

Ce montage à prisme polygonal de réfraction rotatif et à paires de faces parallèles inclinées différemment par rapport à l'axe de rotation se prête bien à une com mutation rapide mais les images de champ successivessont du même ordre de grandeur d'une bande à l'autre et correspondent à des champs spatiaux élémentaires distincts.

Un objet de l'invention est de réaliser un montage qui combine le polygone de réfraction tournant avec une optique de réception bifocale, cet ensemble étant agencé en sorte de commuter deux champs d'observation différents.

Selon l'invention il est proposé un dispositif de formation d'image par balayage linéaire de champ, comportant une optique réceptrice pour produire une image du champ observé dans un plan, une optique de balayage constituée d'un prisme polygonal de réfraction entraîné en rotation autour d'un axe pour produire un déplacement linéaire de l'image de champ selon une direction perpendiculaire à celle dudit axe, le prisme étant muni d'un pluralité de paires de faces parallèles inclinées différemment par rapport à l'axe de rotation d'une paire à la suivante, le dispositif étant caractérisé en ce que l'optique réceptrice comporte au moins deux objectifs de focale différente et positionnés par rapport au prisme pour présenter un plan image commun et former l'image de chaque champ au même emplacement dans ce plan, le prisme de réfraction présente un nombre de paires de faces d'inclinaison distinctes déterminé en fonction de celui des objectifs en sorte de commuter dans ledit plan autant d'images successives de champs spatiaux correspondant à des angles solides de valeur différente le nombre de valeurs d'inclinaisons étant égal à celui des objectifs.

Les particularités et avantages de la présente invention apparaîtront dans la description qui suit donnée à titre d'exemple non limitatif à l'aide des figures annexées qui représentent:

Fig.1 un schéma d'un dispositif d'analyse de champ spatial conforme à la présente invention, montrant le fonctionnement en grand champ;

Fig.2 un schéma correspondant au dispositif selon la Fig. 1 mais montrant cette fois le fonctionnement en petit champ après rotation du prisme;

Fig. 3 un schéma du dispositif selon les Figs. 1 ou 2 montrant plus particulièrement un premier mode de réalisation possible du prisme polygonal de réfraction, ainsi que le plan détecteur;

Fig. 4 un deuxième mode de réalisation de prisme polygonal;

Fig. 5 une variante de réalisation du prisme polygonal de la Fig. 3;

Fig. 6 une autre variante de réalisation du prisme polygonal selon la Fig. 3;

Fig. 7 un schéma d'un mode de réalisation bifocal avec un champ orientable; et

Fig. 8 un schéma d'un mode de réalisation à trois objectifs.

Fig. 9 un troisième mode de réalisation du prisme polygonal pour un système à trois objectifs selon la Fig. 8.

Fig. 10, un dispositif d'analyse de champ spatial conforme à l'invention, comportant plusieurs voies de détection.

Le dispositif d'analyse de champ spatial conforme à l'invention permet d'effectuer avec un même dispositif de balayage et un même senseur l'analyse alternative de deux images, ou plus, correspondant à des champs coaxiaux différents.

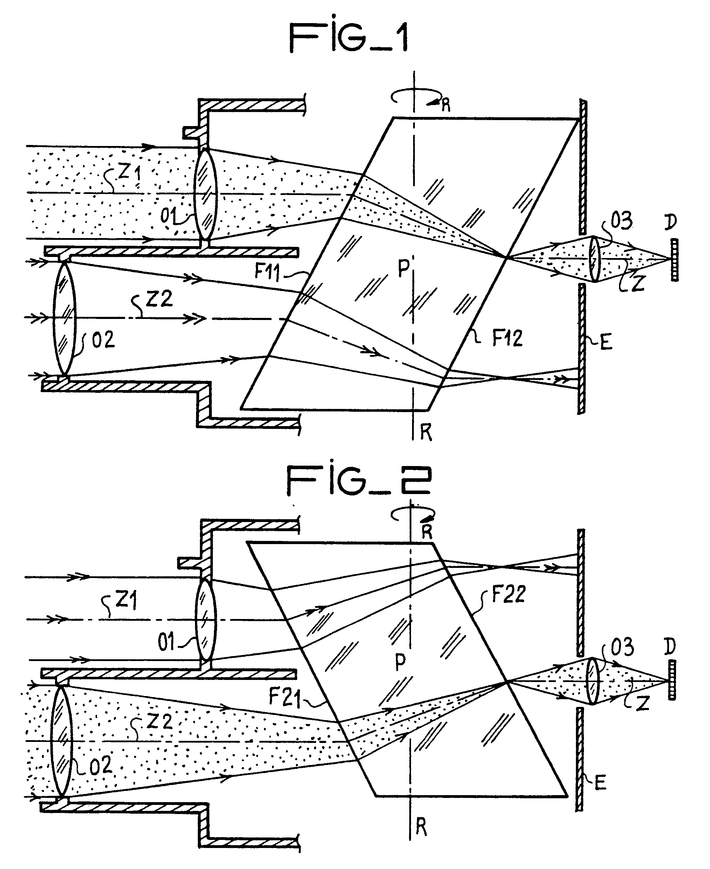

En ce reportant à la Fig. 1, le dispositif se compose d'une optique d'entrée groupant au moins deux objectifs O1 et O2, d'un prisme polygonal de refraction P tournant autour d'un axe R perpendiculaire à la direction des axes optiques Z1 et Z2 des objectifs O1 et O2. A l'arrière du prisme une optique de transport d'image O3 permet de transporter l'image de champ focalisée par l'un ou l'autre des objectifs sur le plan de photodétection d'un détecteur D. Le détecteur D sera de préférence constitué par une barrette orientée parallèlement à la direction R de l'axe de rotation. L'optique O3 conjugue le plan image, le plan focal des objectifs O1 et O2 généralement, avec le détecteur. Ce plan image est représenté à l'endroit de la face de sortie du prisme mais il peut également se situer plus en aval du prisme.

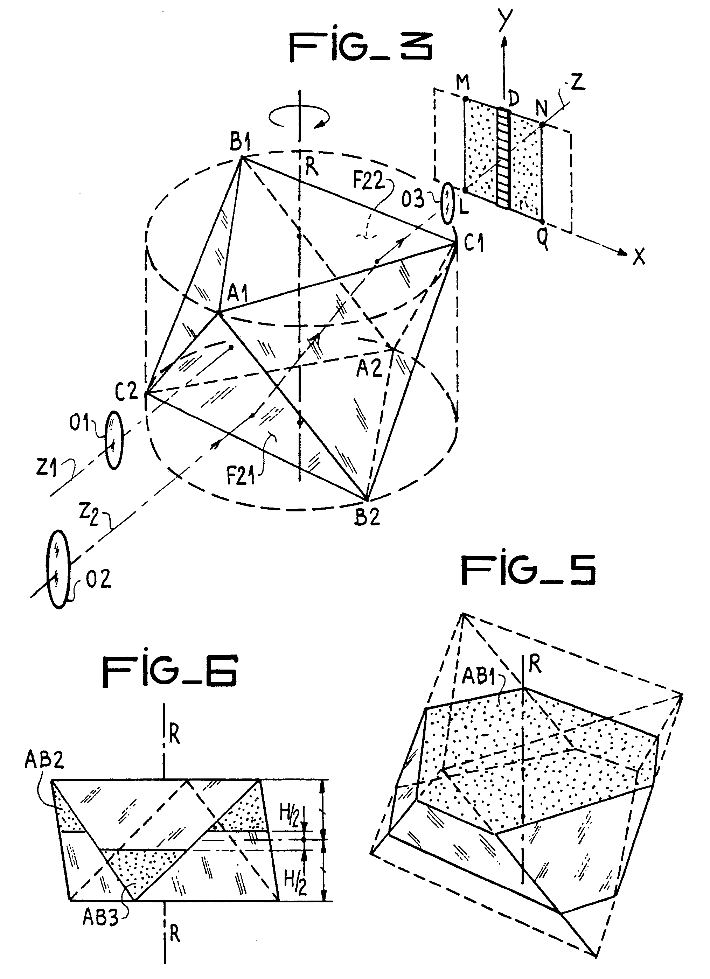

Au cours de la rotation du prisme P autour de l'axe R, le faisceau, par exemple celui traversant l'optique O1 dans le cas de la Fig. 1, se trouve dévié dans un plan perpendiculaire à l'axe de rotation, ce qui réalise le balayage de l'image transverse à la barrette. Ceci est plus aisé à considérer sur la Fig. 3 où l'on a indiqué l'axe Y correspondant à celui de rotation et l'axe X correspondant à celui de défilement de l'image devant le détecteur.

Les deux objectifs présentent des focales différentes, F1 pour l'objectif O1 et F2 pour l'objectif O2; en considérant F1 une courte focale et F2 une grande focale, l'objectif O1 est destiné à couvrir un grand champ et l'objectif O2 un petit champ. Le positionnement de ces objectifs est assuré en conséquence vis à vis du prisme P pour que l'image de champ soit formée dans le même plan et au même emplacement. Le prisme polygonal de réfraction P comporte un nombre de paires de faces d'inclinaison différente qui dépend du nombre d'objectifs utilisés. Ainsi dans le cas considéré, une première paire de faces F11 et F12 va présenter une inclinaison telle que le faisceau lumineux reçu à travers l'objectif O1 va se réfracter à travers le prisme dans le plan focal image correspondant. La paire de faces suivante, comme répresentée sur la Fig. 2, constituée par F21 et F22 va présenter une inclinaison dans l'autre sens en sorte que le faisceau passant cette fois à travers l'objectif O2 va se trouver réfracté et converger dans le même plan focal où se forme l'image de champ, et ainsi de suite. On passera ainsi à une troisième paire de faces, F31 et F32, dont l'inclinaison sera identique à celle de la première paire de faces pour produire à nouveau la commutation avec le champ couvert par l'objectif O1, puis à une quatrième paire de faces qui reproduira à nouveau les conditions de fonctionnement dela Fig. 2, etc... On produit ainsi avec une optique bifocale une commutation de champ en passant successivement d'un grand champ à un petit champ et vice versa.

Dans l'un et l'autre cas de représentation des Figs. 1 et 2, seul l'un des objectifs doit être utilisé, le rayonnement reçu à travers l'autre objectif ne devant pas être pris en considération par le dispositif de balayage P. Selon la représentation dela Fig. 1 ou 2, on montre que ce rayonnement inutile et donc parasite est réfracté à l'entrée et à la sortie du prisme et se trouve projeté en sortie hors de la surface sensible du capteur D. Un écran absorbant E peut être placé en aval du prisme P pour éliminer ce rayonnement non utile; il est disposé de préférence au voisinage du plan image correspondant et il comporte une ouverture devant l'objectif O3, formant diaphragme, pour le passage du rayonnement utile provenant de l'autre objectif et délimiter l'ouverture de champ.

En se reportant à la Fig. 3, on montre un exemple de réalisation du prisme polygonal de réfraction, selon sa forme la plus simple envisageable, suivant laqueile le prisme comporte trois paires de facettes. Com me on peut le voir, la structure du prisme résulte de deux triangles équilatéraux A1, B1, C1, et A2, B2, C2 orientés à 180° l'un de l'autre dans deux plans parallèles correspondant à des sections droites d'un cylindre. En conséquence, chaque sommet d'un triangle, le sommet A par exemple, formera avec l'axe de rotation R un plan médiateur passant notamment par le sommet A2 de l'autre triangle et le milieu du côté C2, B2. Suivant cette réalisation, on dispose de deux valeurs d'inclinaison différentes, une première paire de faces est constituée par A1, B2, C2 et A2, B1, C1, une seconde paire de faces par A1, B2, C1 et A2, B1, C2, puis la troisième paire de faces par A2, B2, C1 et A1, B1, C2. Ensuite, pour la quatrième paire de faces on retrouve les éléments de la première paire de faces et ainsi de suite. Ces trois paire de faces ne présentent que deux valeurs d'inclinaison différentes étant donné par exemple que les faces A1, C2, B2 et A2, B2, C1 sont également inclinées par rapport à l'axe de rotation R compte-tenu de la symétrie du montage.

La Fig. 3 montre également l'image de champ instantanée MNLQ formée au niveau du détecteur, le déplacement s'effectuant suivant la direction de l'axe des X lors de la rotation, en sorte que les différents points le long de MN ou le long de LQ défilent au niveau de la barrette.

Il est entendu que la version représentée du prisme n'est pas limitative et que l'on peut considérer une réalisation à plus grand nombre de faces. Ainsi, au lieu de partir d'une structure en forme de triangle dans deux plans, on peut partir d'un polygone à plus grand nombre de côtés. Toutefois, il y a lieu de considérer que ce nombre de côté doit être impair pour obtenir des faces opposées parallèles dans les conditions précitées, c'est-à-dire que chaque sommet et l'axe R forment un plan médiateur pour une arête de l'autre polygone, et vice-versa. Ainsi, pour un polygone à $(2n+1)$ côtés, les bases sont decalées angulairement de $\frac{\pi}{2n+1}$ relativement à l'axe R pour former $2.(2n+1)$ faces latérales ou $(2n+1)$ paires de faces, avec deux valeurs d'inclinaison (ou, en fait une seule valeur le signe changeant d'une paire de faces à la suivante ainsi qu'après rotation d'un demi-tour pour chaque paire considérée).

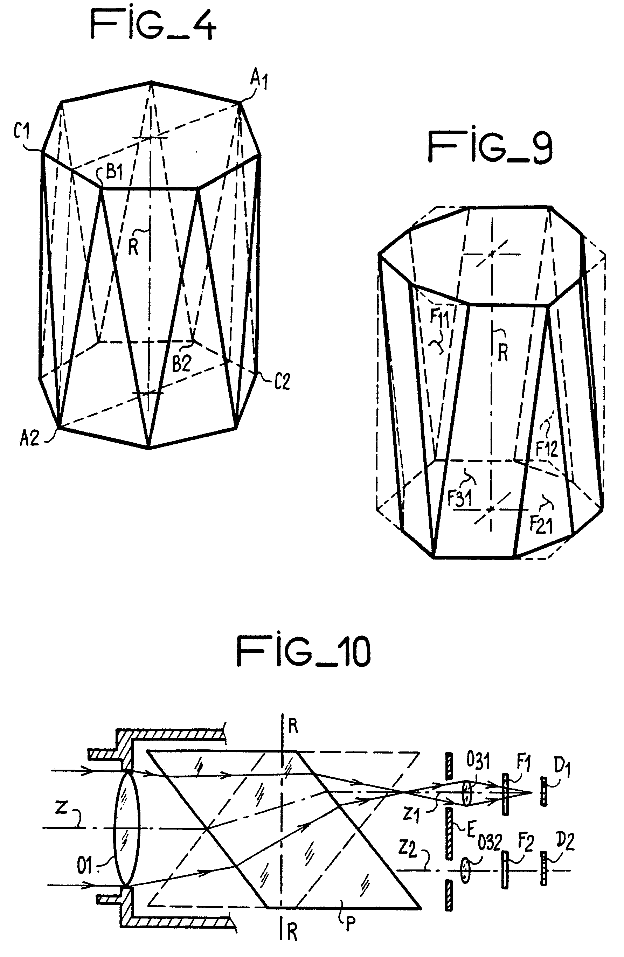

Un exemple de prisme à 14 facettes est dessiné sur la Fig. 4, le polygone de base a 7 côtés et le deuxième polygone est décalé en sorte que chaque sommet (A1, A2) coïncide avec le milieu de l'arête de l'autre (B2, C2, B1, C1).

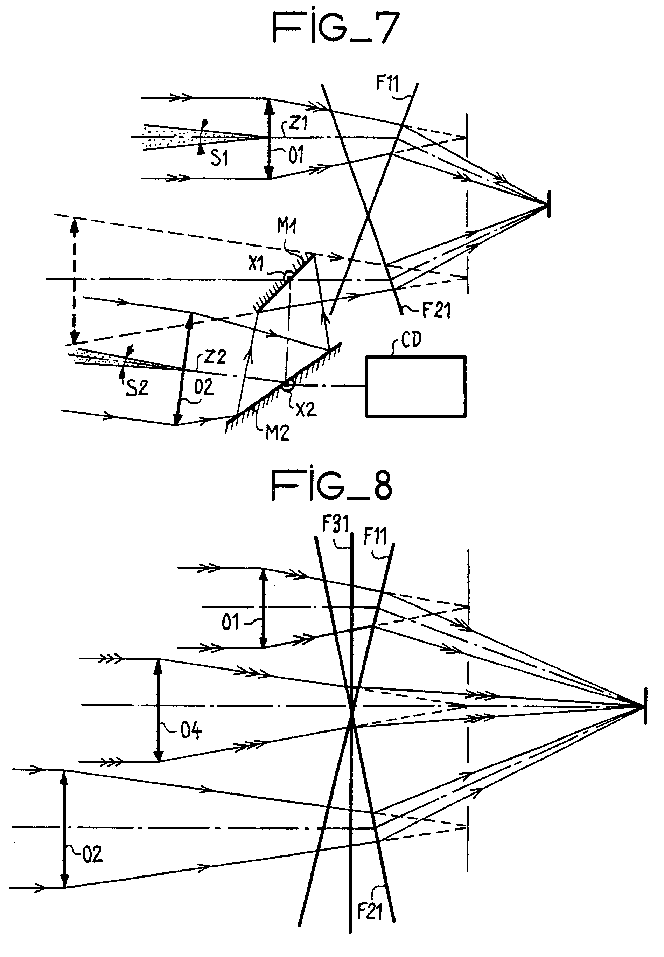

Sur la Fig. 5, on a représenté une variante du prisme de là Fig. 3 suivant laquelle le prisme est tronqué entre deux plans intermediaires et à une hauteur réduite. Sur cette variante on voit également que la face supérieure ainsi que la face inférieure cette dernière n'est pas visible sur la figure, sont opacificiées par un dépôt absorbant AB1 pourse protéger de la lumière parasite.

La même technique est montrée sur la variante dela Fig. 6 où le dépôt absorbant est effectué sur les faces latérales actives du prisme mais dans les zones correspondant au rayonnement de l'objectif inutilisé. Ces dépôts sont indiqués par la référence AB2 pour la partie supérieure correspóndant à l'occultation de l'objectif O1 dans le cas des figures précédentes, et AB3 pour le dépôt dans les parties inférieures correspondant pour la face suivante à l'occultation du rayonnement sortant de l'objectif O2. Il y a lieu de remarquer que ces dépôts absorbants sont toutefois limités à une certaine distance H/2 du plan médian central qui coupe le prisme en deux perpendiculairement à l'axe R, étant donne que suivant ce plan et dans cette zone ménagée va se produire, côté sortie, l'image de champ focalisée, cette image devant être reprise ensuite par l'objectif O3. On a ainsi décrit un système optique bifocal qui permet pour le détecteur de voir à travers une première paire de faces les rayons issus d'une première optique O1 correspondant par exemple à une couverture grand champ et puis de voir lors du passage de la paire de faces suivante le rayonnement issu de l'optique O2 corres-pondant à un petit champ, coaxial au précédent, et ainsi de suite, la commutation de champ étant liée à la vitesse de rotation du prisme et à son nombre de facettes. On a donc bien réalisé l'analyse de deux champs différents avec un même dispositif de balayage et un même détecteur.

La réalisation décrite comportant une optique bifocale correspond à un mode préféré de réalision parce que d'exécution simple. Par contre, en ce qui concerne l'exécution du prisme polygonal de réfraction, il est préférable de disposer d'un nombre suffisant de facettes pour accroître, à rotation égale, le nombre de commutations par le prisme. En ce sens une version de prismes à 14 faces selon la Fig.4 serait préférable à celle la plus simple dela Fig. 3.

En premier lieu, on se reportera à la Fig. 7 qui est destinée à montrer, sous forme d'un schéma partiel, que les champs peuvent ne pas être coaxiaux. Dans le montage d'un des deux objectifs, l'objectif O2 en l'occurrence, c'est à dire celui correspondant au petit champ, il est prévu des moyens additionnels pour régler l'orientation du petit champ observé. Ces moyens comportent un miroir de renvoi M1 et un deuxième miroir M2 entraînés respectivement en rotation autour d'un axe X1 et d'un axe X2 perpendiculaires au plan de figure. L'objectif O2 est solidaire du miroir M2 et tourne en même temps que celui d'un angle double de l'angle de rotation du miroir M1. Le bloc CD symbolise des moyens de commande de la rotation des miroirs. Ainsi, l'axe optique Z2 peut être orienté différemment et être disposé parallèle à l'axe Z1 ou non, en sorte que le petit champ correspond à une zone spatiale d'angle solide S2 interne au grand champ d'angle solide S1 couvert par l'objectif O1, ou non, la partie S2 pouvant être à la limite située à l'extérieur de S1. Pour simplifier la figure et rendre compréhensible le fonctionnement, on a représenté que les deux positions d'inclinaison de la face d'entrée, celles correspondant aux faces F11 et F21 des Figs. 1 et 2. Les angles S1 et S2 correspondent à des images de champ de même grandeur dans le plan image.

En se reportant maintenant à la Fig. 8, le schéma qui s'y trouve représenté est destiné à montrer une variante qui comporte plus de deux objectifs. On s'est limité à trois objectifs étant donné qu'une réalisation d'un nombre d'objectifs plus élevé devient rapidement plus complexe et difficile. Les trois objectifs O1, O2 et O4 ont été représentés dans le plan de figure mais ils peuvent se trouver dans des plans séparés. Ici encore on a représenté le prisme par des inclinaisons successives de la face d'entrée indiquée F11, F21 et F31, cette dernière pour une troisième position angulaire verticale correspondant au troisième objectif O4 destiné à couvrir un champ moyen, O1 correspondant comme on l'a dit au grand champ et O2 à un petit champ. Dans le cas d'une système à plus de deux objectifs deux cas différents existent suivant la parité de ce nombre d'objectifs. Si le nombre est pair on aura un nombre pair d'inclinaison de faces. Si ce nombre est impair, le prisme devra présenter des paires de faces sans inclinaison par rapport à l'axe de rotation du prisme, et le champ correspondant devra être balayé deux fois plus souvent que les autres champs.

La Fig. 9 donne une représentation d'un mode d'exécution du prisme polygonal pouvant convenir à une version à trois objectifs d'entrée selon la Fig. 8. Ce prisme est obtenu à partir d'un prisme droit de section hexagonale dont on a usiné respectivement des coins avec l'inclinaison désirée pour former les paires de faces inclinées. Ainsi on peut distinguer la face F31 droit d'origine et de part et d'autre les faces F11 et F21 d'inclinaison opposées par rapport à la verticale R. A chacune de ces faces correspond une face parallèle en vis-à-vis, par exemple F12 à F11.

On peut se rendre compte aisément qu'un dispositif d'analyse conforme à l'invention présente de nombreuses variantes d'exécution et si l'on est rapidement limité dans la pratique pour le nombre d'objectifs, de préférence deux, éventuellement trois, il n'en est pas de même pour le prisme polygonal. De manière générale le nombre d'inclinaisons distinctes des faces est égal au nombre d'objectifs et le nombre de faces du prisme est donné par le produit du nombre d'objectifs par un nombre impair, si ce nombre d'objectifs est pair. Si le nombre d'objectifs est impair, le nombre de faces est donné par le produit du nombre d'objectifs augmenté d'une unité, par un nombre impair. Dans ce dernier cas, le prisme comporte des faces non inclinées par rapport à l'axe de rotation et alternées avec les faces inclinées pour que le champ correspondant soit analysé avec une fréquence multiple de celle des autres champs (fréquence double dans le cas de trois objectifs).

Il y a lieu également de remarquer, ce qui peut être important côté exploitation, que les bandes spectrales de réception dans les différents champs peuvent être différentes en disposant, dans chaque voie optique, de moyens de filtrage optiques correspondants à la bande de sélection désirée pour cette voie. Ces moyens de filtrage peuvent être réalisés de diverses manières connues, par exemple le choix des verres des objectifs, des dépôts sur les objectifs, des filtres séparés interposés sur le trajet optique. On pourra ainsi avoir, par exemple, une voie recevant dans le visibie et une deuxiéme voie dans l'infrarouge; à noter d'ailleurs que le champ pourrait être le même pour ces deux voies en utilisant des objectifs semblables pour O1 et O2.

Parmi d'autres variantes possibles, on peut aussi considérer d'utiliser le prisme en trajet optique inversé pour commuter des voies de détection. Une représentation correspondant à un cas de ce genre est donnée Fig. 10, résultant de l'inversion de fonctions par rapport au montage à deux objectifs Fig. 1 ou 2. On retrouve en effet le prisme P et le passage cette fois d'une voie optique unique d'axe Z vers deux voies réceptrices d'axe Z1 et Z2 commutées alternativement par la rotation du prisme. Cette variante peut aussi être étendue à trois détecteurs, ou plus. Des moyens de filtrage dans des bandes spectrales différentes peuvent aussi être prevus dans les différentes voies réceptrices, par exemple les filtres F1 et F2 interposés entre les optiques O31 et O32 de reprise d'image et les détecteurs assodiés D1 et D2. De même que précédemment, un écran E pourra être disposé sur le trajet optique, par exemple à proximité du plan image intermédiaire, c'est-à-dire entre le prisme et·les optiques O31 et

O32 pour d'une part absorber des rayonnements parasites et ne laisser passer que le rayonnement utile dans le champ désiré par des ouvertures correspondantes en regard des objectifs O31 et O32.

**Revendications**

1. Dispositif de formation d'image par balayage linéaire de champ, comportant une optique réceptrice pour produire une image du champ observé dans un plan, une optique de balayage constituée d'un prisme polygonal de réfraction (P) entraîné en rotation autour d'un axe (R) pour produire un déplacement linéaire de l'image de champ selon une direction (X) perpendiculaire à celle (Y) dudit axe, le prisme étant muni d'un pluralité de paires de faces parallèles (F11, F12) inclinées différemment par rapport à l'axe de rotation d'une paire à la suivante, le dispositif étant caractérisé en ce que l'optique réceptrice comporte au moins deux objectifs (O1, O2) de focale différente et positionnés par rapport au prisme pour présenter un plan image commun et former l'image de chaque champ au même emplacement dans ce plan, le prisme de réfraction présente un nombre de paires de faces d'inclinaison distinctes déterminé en fonction de celui des objectifs en sorte de commuter dans ledit plan autant d'images successives de champs spatiaux correspondant à des angles solides de valeur différente (S1, S2) le nombre de valeurs d'inclinaisons étant égal à celui des objectifs.

2. Dispositif de formation d'image selon la revendication 1, caractérisé en ce que le nombre d'objectifs (O1, O2) est pair et le nombre de faces du prisme est égal au produit du nombre d'objectifs par un nombre impair.

3. Dispositif de formation d'image selon la revendication 1, caractérisé en ce qu'il comporte un nombre impair d'objectifs (O1, O2, O4) et que le nombre de faces du prisme (P) est égal au produit du nombre d'objectifs augmenté d'une unité par un nombre impair, lesdites faces comportant des faces (F31) d'inclinaison nulles par rapport à l'axe de rotation (R) alternées avec les autres faces (F11, F21) d'inclinaison non nulles.

4. Dispositif de formation d'image selon la revendication 1 ou 2, caractérisé en ce que l'optique réceptrice est bifocale, composée avec deux objectifs (O1, O2) et que le prisme polygonal (P) de réfraction présente deux valeurs d'inclinaison des faces pour commuter deux images de champs spatiaux distincts lors de la rotation, d'une face à la suivante, ledit prisme (P) étant constitué par un polyèdre convexe qui présente au moins trois paires de faces.

5. Dispositif de formation d'image selon l'une quelconque des revendications précédentes, caractérisé en ce que les faces du prisme (P) qui reçoivent le rayonnement lumineux à travers les

objectifs (O1, O2) sont recouvertes partiellement d'un dépôt absorbant (AB2 et AB3) pour éliminer le rayonnement correspondant à celui provenant de l'objectif et non utilisé pour la paire de faces considérée.

6. Dispositif de formation d'image selon la revendication 2 ou 4, caractérisé en ce le polyèdre (P) est tronqué perpendiculairement à l'axe de rotation (R) entre deux plans parallèles suivant lesquels se situent les faces supérieure et inférieure inutilisées du prisme, lesdites faces étant recouvertes d'un dépôt absorbant (AB1) pour éliminer le rayonnement parasite.

7. Dispositif de formation d'image selon l'une quelconque des revendications 2, 4, 6, caractérisé en ce que l'un (O2) des deux objectifs (O1, O2) est rendu orientable par rotation autour d'un axe (X1) en sorte de faire varier le positionnement angulaire du champ spatial (S2) couvert par cet objectif, ledit objectif orientable étant combiné avec des moyens d'orientation qui comportent des miroirs déviateurs tournants (M1, M2) dont l'un (M2) solidairement avec l'objectif (O2) et des moyens d'entraînement (CD) en rotation des miroirs dans le rapport 2/1.

8. Dispositif de formation d'image selon l'une quelconque des revendications précédentes, caractérisé en ce qu'il comporte, en aval du prisme polygonal de réfraction (P) tournant, un objectif (O3) de reprise d'image pour transporter l'image focalisée par les objectifs d'entrée successifs (O1, O2 ou O1, O4, O2) dans un même plan de photodétection, une barrette photosensible (D) disposée dans ce plan selon une direction (Y) perpendiculaire à celle (X) de défilement et couvrant toute la hauteur de l'image dans ce sens, et un écran (E) placé entre le prisme et l'objectif de transport d'image, pour éliminer des rayonnements parasites réfractés par le prisme et percé d'une ouverture pour délimiter l'ouverture de champ.

9. Dispositif de formation d'image par balayage linéaire de champ, comportant une optique réceptrice pour produire une image du champ observé dans un plan, une optique de balayage pour produire le déplacement linéaire de l'image de champ à l'aide d'un prisme polygonal de réfraction (P) entraîné en rotation autour d'un axe (R) perpendiculaire au déplace ment (X) le prisme étant muni d'un pluralité de paires de faces parallèles (F11, F12) inclinées différemment par rapport à l'axe de rotation d'une paire à la suivante, le dispositif étant caractérisé en ce qu'il comporte au moins deux détecteurs (D1, D2) le prisme (P) présente un nombre de paires de faces (F11, F12) d'inclinaison distinctes déterminé en fonction de celui des détecteurs en sorte de commuter successivement l'image dudit champ sur lesdits détecteurs, le nombre de valeurs d'inclinaison étant égal à celui des détecteurs, et en ce qu'il comporte en aval du prisme polygonal de réfraction (P) tournant, pour chaque détecteur (D1, D2) un objectif (O31, O32) de reprise d'image pour transporter l'image focalisée par l'objectif d'entrée (O1) dans le plan de photodétection du détecteur associé, et y former l'image globale du champ observé correspondant, lesdits objectifs de reprise d'image étant de focale différente pour avoir des champs d'observation d'angle solide différents, chaque détecteur étant constitué par une barrette photosensible disposée dans ce plan selon une direction perpendiculaire au défilement de l'image, et en ce qu'il comporte, en outre, un écran (E) placé entre le prisme et les objectifs de transport d'image (O31, O32) et percé d'ouvertures pour éliminer des rayonnements parasites et pour délimiter l'ouverture du champ correspondant en regard de chaque objectif de transport d'image.

10. Dispositif de formation d'image selon la revendication 9, caractérisé en ce que le nombre de détecteurs est pair et le nombre de faces du prisme est égal au produit du nombre de détecteurs par un nombre impair.

11. Dispositif de formation d'image selon la revendication 9, caractérisé en ce qu'il comporte un nombre impair de détecteurs et que le nombre de faces du prisme est égal au produit du nombre de détecteurs augmenté d'une unité par un nombre impair, lesdites faces comportant des faces d'inclinaison nulles par rapport à l'axe de rotation, alternées avec les autres faces d'inclinaison non nulles.

12. Dispositif de formation d'image selon l'une quelconque des revendications précédentes, caractérisé en ce qu'il comporte, en outre, des moyens de filtrage (F1, F2) pour détecter successivement dans au moins deux bandes spectrales distinctes d'exploitation.

13. Utilisation d'un dispositif de formation d'image selon l'une quelconque des revendications 1 à 8 considérée seule ou combinée avec la revendication 12, pour réaliser un dispositif d'analyse de champ spatial pour la localisation angulaire d'objets rayonnants, caractérisé en ce qu'il permet une analyse simultanée d'au moins deux champs, avec le même dispositif de balayage et le même détecteur (D).

**Patentansprüche**

1. Vorrichtung zur Bilderzeugung durch lineare Gesichtsfeldabtastung mit einer Empfangsoptik zur Erzeugung eines Bildes des betrachteten Gesichtsfeldes in einer Ebene, einer Abtastoptik, die von einem polygonalen Brechungsprisma (P) gebildet ist, das um eine Achse (R) gedreht wird, damit eine lineare Verschiebung des Gesichtsfeldbildes in einer zur Richtung (Y) dieser Achse senkrechten Richtung (X) erzeugt wird, wobei das Prisma mit mehreren Paaren paralleler Flächen (F11, F12) versehen ist, die bezüglich der Drehachse von einem Paar zum nächsten unterschiedlich geneigt sind, dadurch gekennzeichnet, daß die Empfangsoptik wenigstens zwei Objektive (O1, O2) mit unterschiedlicher Brennweite enthält, die in bezug auf das Prisma so angeordnet sind, daß sie eine gemeinsame Bildebene erzeugen und ein Abbild jedes Gesichtsfeldes an der gleichen Stelle in dieser Ebene erzeugen, und daß das Brechungsprisma eine Anzahl von Flächenpaaren mit bestimmter Neigung aufweist, die in Abhängigkeit von der Anzahl der Objektive so festgelegt ist, daß in dieser Ebene ebenso viele aufeinanderfolgende räumliche Bilder entsprechend unterschiedlichen Raumwinkeln (S1, S2) umgeschaltet werden, wobei die Anzahl der Neigungswerte gleich der Anzahl der Objektive ist.

2. Vorrichtung nach Anspruch 1, dadurch gekennzeichnet, daß die Anzahl der Objektive (O1, O2) gerade ist und daß die Anzahl der Flächen des Prismas gleich dem Produkt aus der Anzahl der Objektive und einer ungeraden Zahl ist.

3. Vorrichtung nach Anspruch 1, dadurch gekennzeichnet, daß eine ungerade Anzahl von Objektiven (O1, O2, O4) vorhanden ist und daß die Anzahl der Flächen des Prismas (P) gleich dem Produkt aus der um den Wert Eins vermehrten Anzahl der Objektive und einer ungeraden Zahl ist, wobei die Flächen auch Flächen (F31) enthalten, die bezüglich der Drehachse (R) die Neigung Null haben und sich mit den anderen Flächen (F11, F21) abwechseln, die eine von Null abweichende Neigung haben.

4. Vorrichtung nach Anspruch 1 oder 2, dadurch gekennzeichnet, daß die Empfangsoptik bifokal ist und aus zwei Objektiven (O1, O2) zusammengesetzt ist und daß das polygonale Brechungsprisma (P) zwei Flächenneigungswerte aufweist, damit zwei Bilder bestimmter räumlicher Gesichtsfelder bei der Drehung von einer Fläche zur nächsten umgeschaltet werden, wobei das Prisma (P) von einem konvexen Polyeder gebildet ist, das wenigstens drei Flächenpaare aufweist.

5. Vorrichtung nach einem der vorhergehenden Ansprüche, dadurch gekennzeichnet, daß die Flächen des Prismas (P), die die Lichtstrahlung durch die Objektive (O1, O2) empfangen, teilweise mit einem absorbierenden Belag (AB2, AB3) beschichtet sind, damit die Strahlung eliminiert wird, die von dem Objektiv kommt und die für das betrachtete Flächenpaar nicht benutzt wird.

6. Vorrichtung nach Anspruch 2 oder 4, dadurch gekennzeichnet, daß das Polyeder (P) senkrecht zur Drehachse (R) zwischen zwei parallelen Ebenen abgeschnitten ist, in denen die oberen und unteren nicht benutzten Flächen des Prismas liegen, wobei diese Flächen mit einem absorbierenden Belag (AB1) zur Eliminierung der Störstrahlung beschichtet sind.

7. Vorrichtung nach einem der Ansprüche 2, 4, 6, dadurch gekennzeichnet, daß das eine (O2) der zwei Objektive (O1, O2) durch Drehen um eine Achse (X1) so ausrichtbar ist, daß die Winkellage des von diesem Objektiv überdeckten räumlichen Gesichtsfeldes (S2) variiert wird, wobei dieses ausrichtbare Objektiv mit Ausrichtmitteln kombiniert ist, die drehbare Ablenkspiegel (M1, M2) enthalten, von denen der eine (M2) fest mit dem Objektiv (O2) verbunden ist, und ferner Drehantriebsmittel (CD) enthalten, die die Spiegel im Verhältnis 2/1 drehen.

8. Vorrichtung nach einem der vorhergehenden Ansprüche, dadurch gekennzeichnet, daß nach dem drehbaren polygonalen Brechungsprisma (P) ein Bildaufnahmeobjektiv (O3) angebracht ist, das das von den aufeinanderfolgenden Eingangsobjektiven (O1, O2 oder O1, O4, O2) fokussierte Bild in eine Photodetektorebene überträgt, daß in dieser Ebene eine lichtempfindliche Leiste (D) angebracht ist, deren Verlaufsrichtung (Y) senkrecht zur Richtung (X) der Strahlbewegung liegt und die die gesamte Höhe des Bildes in dieser Richtung überdeckt, und daß zwischen dem Prisma und dem Bildübertragungsobjektiv ein Schirm (E) angeordnet ist, der vom Prisma gebrochene Störstrahlungen eliminiert und eine Öffnung zur Begrenzung der Gesichtsfeldweite enthält.

9. Vorrichtung zur Bilderzeugung durch lineare Gesichtsfeldabtastung mit einer Empfangsoptik zur Erzeugung eines Bildes des betrachteten Gesichtsfeldes in einer Ebene, einer Abtastoptik zur Erzeugung einer linearen Verschiebung des Gesichtsfeldes mittels eines polygonalen Brechungsprismas (P), das um eine senkrecht zu der Verschiebung (X) verlaufende Achse (R) gedreht wird, wobei das Prisma mit mehreren Paaren paralleler Flächen (F11, F12) versehen ist, die bezüglich der Drehachse von einem Paar zum nächsten unterschiedlich geneigt sind, dadurch gekennzeichnet, daß wenigstens zwei Detektoren (D1, D2) vorgesehen sind, daß das Prisma (P) eine gerade Anzahl von Paaren von Flächen (F11, F12) mit unterschiedlicher Neigung aufweist, die in Abhängigkeit von der Anzahl der Detektoren bestimmt wird, so daß das Bild des Gesichtsfeldes nacheinander auf die Detektoren geschaltet wird, wobei die Anzahl der Neigungswerte gleich der Anzahl der Detektoren ist, daß hinter dem drehbaren polygonalen Brechungsprisma (P) für jeden Detektor (D1, D2) ein Bildaufnahmeobjektiv (O31, O32) angebracht ist, das das von dem Eingangsobjektiv (O1) fokussierte Bild in die zugehörige Photodetektionsebene des zugehörigen Detektors überträgt und dort ein Gesamtbild des entsprechenden beobachteten Gesichtsfeldes erzeugt, wobei die Bildaufnahmeobjektive unterschiedliche Brennweiten haben, damit Beobachtungsgesichtsfelder mit unterschiedlichen Raumwinkeln entstehen, und wobei jeder Detektor von einer lichtempfindlichen Leiste gebildet ist, die in der Ebene in einer zur Schwenkbewegung des Bildes senkrechten Richtung angeordnet ist, und daß außerdem zwischen dem Prisma und den Bildübertragungsobjektiven (O31, O32) ein Schirm (E) angebracht ist, der zur Eliminierung von Störstrahlungen und zur Begrenzung der Weite des entsprechenden Gesichtsfeldes in Ausrichtung auf jedes Bildübertragungsobjektiv Öffnungen aufweist.

10. Vorrichtung nach Anspruch 9, dadurch gekennzeichnet, daß die Anzahl der Detektoren gerade ist und daß die Anzahl der Flächen des Prismas gleich dem Produkt der Anzahl der Detektoren und einer ungeraden Zahl ist.

11. Vorrichtung nach Anspruch 9, dadurch gekennzeichnet, daß die Anzahl der Detektoren ungerade ist und daß die Anzahl der Flächen des Prismas gleich dem Produkt aus der um den Wert Eins vermehrten Anzahl der Detektoren und einer ungeraden Zahl ist, wobei die Flächen auch Flächen mit der Neigung Null in bezug auf die Rotationsachse enthalten, die sich mit den anderen Flächen mit von Null abweichenden Neigungen abwechseln.

12. Vorrichtung nach einem der vorhergehenden Ansprüche, dadurch gekennzeichnet, daß ferner Filtermittel (F1, F2) vorgesehen sind, damit nacheinander wenigstens zwei bestimmte Auswertungs-Spektralbänder erfaßt werden.

13. Anwendung einer Vorrichtung zur Bilderzeugung nach einem der Ansprüche 1 bis 8 allein oder in Kombination mit Anspruch 12 zur Verwirklichung einer Vorrichtung zum Abtasten eines räumlichen Gesichtsfeldes für die winkelmäßige Erfassung strahlender Objekte, dadurch gekennzeichnet, daß eine gleichzeitige Abtastung von wenigstens zwei Gesichtsfeldern mit der gleichen Abtastvorrichtung und dem gleichen Detektor (D) ermöglicht wird.

## Claims

1. Dewice for image formation by linear field of view scanning with a reception optical system for generating an image of the field of view observed in a plane, a scanning optical system formed by a polygonal refraction prism (P) rotated about an axis (R) to produce a linear displacement of the field of view image in a direction (X) perpendicular to the direction (Y) of said axis, the prism being provided with a plurality of pairs of parallel faces (F11, F12) inclined differently with respect to the axis of rotation from one pair to the next, characterized in that the reception optical system comprises at least two objectives (O1, O2) having different focal length and positioned with respect to the prism such that they have a common image plane and form an image of each field of view at the same point in said plane, and that the refraction prism comprises a number of face pairs with specific inclination which is fixed in dependence upon the number of the objectives in such a manner that in said plane as many consecutive spatial images as corresponding to different solid angles (S1, S2) are switched, the number of the inclination values being equal to the number of the objectives.

2. Device according to claim 1, characterized in that the number of the objectives (O1, O2) is even and that the number of the faces of the prism is equal to the product of the number of objectives and an odd number.

3. Device according to claim 1, characterized in that it comprises an odd number of objectives (O1, O2, O4) and that the number of the faces of the prism (P) is equal to the product of the number of the objectives incremented by unity and an odd number, the faces also including faces (F31) which with respect to the axis of rotation (R) have the inclination zero and alternate with the other faces (F11, F21) having an inclination deviating from zero.

4. Device according to claim 1 or 2, characterized in that the reception optical system is bifocal and is composed of two objectives (O1, O2) and that the polygonal refraction prism (P) comprises two face inclination values for switching two images of predetermined spatial fields of view on rotation from one face to the next, the prism (P) being formed by a convex polyhedron having at least face pairs.

5. Device according to any one of the preceding claims, characterized in that the faces of the prism (P) which receive the light radiation through the objectives (O1, O2) are partially coated with an absorbent coating (AB2, AB3) to eliminate the radiation coming from the objective and not utilized for the pair of faces considered.

6. Device according to claim 2 or 4, characterized in that the polyhedron (P) is truncated perpendicularly to the axis of rotation (R) between two parallel planes in which the upper and lower faces of the prism which are not used lie, said faces being coated with an absorbent coating (AB1) for eliminating the interference radiation.

7. Device according to any one of claims 2, 4, 6, characterized in that the one (O2) of the two objectives (O1, O2) is orientatable by rotation about an axis (X1) so that the angular position of the spatial field of view (S2) is varied, said orientatable objective being combined with orientation means including rotatable deflection mirrors (M1, M2) of which the one (M2) is fixedly connected to the objective (O2), and furthermore rotary drive means (CD) which rotate the mirrors in the ratio 2/1.

8. Device according to any one of the preceding claims, characterized in that following the rotatable polygonal refraction prism (P) an image-receiving objective (O3) is disposed for transmitting the image focused by the successive entrance objectives (O1, O2 or O1, O4, O2) to the same photodetection plane, that in said plane a photosensitive strip (D) is disposed along a direction (Y) perpendicular to the direction (X) of the beam movement and covering the entire height of the image in said direction, and that between the prism and the image transfer objective a screen (E) is arranged for eliminating the interference rays refracted by the prism and traversed by an opening for limiting the field of view aperture.

9. Device for image formation by linear field of view scanning comprising a reception optical system for producing an image of the observed field of view in a plane, a scanning optical system for producing a linear displacement of the field of view by means of a polygonal refraction prism (P) rotated about an axis (R) extending perpendicularly to the displacement (X), the prism being provided with a plurality of pairs of parallel faces (F11, F12) inclined differently with respect to the axis of rotation from one pair to the next, characterized in that it comprises at least two detectors (D1, D2), that the prism (P) has an even number of pairs of faces (F11, F12) of different inclination determined as a function of the number of the detectors so that the image of the field of view is switched consecutively onto the detectors, the number of the inclination values being equal to the number of the detectors, that following the rotatable polygonal refraction prism (P) for each detector (D1, D2) an image-receiving objective (O31, O32) is arranged for transferring the image focused by the entrance objective (O1) to the associated photodetection plane of the associated detector and there forming a global image of the corresponding field of view observed, the image-receiving objectives having different focal lengths to obtain observation fields of view with different solid angles and each detector being formed by a photosensitive strip which is arranged in said plane in a direction perpendicular to the movement of the image, and that in addition between the prism and the image transfer objectives (O31, O32) a screen (E) is disposed and provided with apertures for eliminating interference rays and for limiting the width of the corresponding field of view with regard to each image transfer objective.

10. Device according to claim 9, characterized in that the number of the detectors is even and that the number of the faces of the prism is equal to the product of the number of the detectors and an odd number.

11. Device according to claim 9, characterized in that the number of the detectors is odd and that the number of the faces of the prism is equal to the product of the number of detectors incremented by unity and an odd number, the faces also including faces with the inclination zero with respect to the rotation axis alternating with the other faces with inclinations differing from zero.

12. Device according to any one of the preceding claims, characterized in that in addition filter means (F1, F2) are provided for detecting successively in at least two distinct evaluation spectral bands.

13. Use of a device for image formation according to any one of claims 1 to 8 on its own or in combination with claim 12 for implementing a device for scanning a spatial field of view for the angular locating of radiant objects, characterized in that a simultaneous scanning of at least two fields of view is possible with the same scanning means and the same detector (D).

FIG_1

FIG_2

0 138 646

1

FIG_3

FIG_5

FIG_6

FIG_4

FIG_9

FIG_10

# FIG_7

# FIG_8